# EUROPÄISCHE PATENTSCHRIFT

(11) **EP 1 220 550 B1**
(45) Veröffentlichungstag und Bekanntmachung des Hinweises auf die Patenterteilung: **18.04.2007**
(21) Anmeldenummer: 01130472.2
(22) Anmeldetag: 20.12.2001
(51) Int. Cl.: H04Q 3/62, H04M 3/42

(54) **Kommunikationsvorrichtung**
Communication device
Appareil de communication

(30) Priorität: 28.12.2000 DE 10065513
(43) Veröffentlichungstag der Anmeldung: 03.07.2002
(73) Patentinhaber: Fujitsu Siemens Computers GmbH, 80807 München (DE)
(72) Erfinder: Kirchmayer, Markus, 85053 Ingolstadt (DE)
(74) Vertreter: Epping - Hermann - Fischer

(56) Entgegenhaltungen:
- WO-A-99/38312
- DE-A1- 19 745 026
- US-A- 5 649 005

## Beschreibung

Die Erfindung betrifft eine Kommunikationsvorrichtung, die für Computertelefonie geeignet ist. Unter Computertelefonie werden Anwendungen verstanden, bei denen Telefonfunktionen über einen Computer steuerbar sind. Solche Kommunikationsvorrichtungen liegen im Trend im Telekommunikationsbereich, denn sie zeichnen sich durch die Konvergenz von Sprach- und Datenübertragung aus. Dazu haben komfortable Systeme wie Unified Messaging und VoIP beigetragen, ebenso wie die weitere Verbreitung des Internets durch e-Commerce und WAP. Gemeinsames Merkmal aller neuen Anwendungsgebiete der Telekommunikation ist die Notwendigkeit, das hohe Datenaufkommen zuverlässig und sicher verwalten zu können.

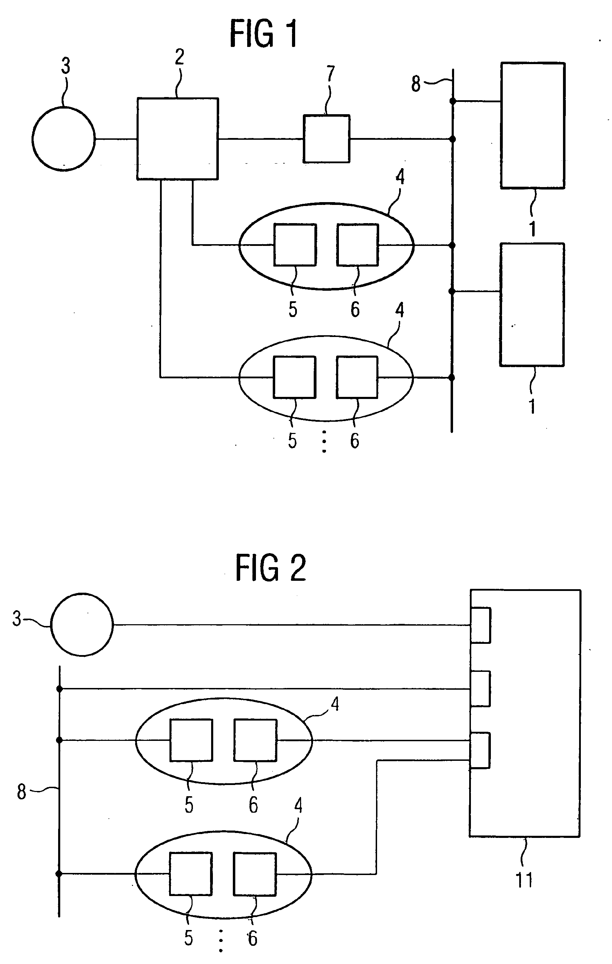

Neben dem Telefon gehört heute ein PC mit Internet-Anschluß beziehungsweise Email-Anschluß zur Grundausstattung eines jeden modernen Arbeitsplatzes. Oftmals werden aber diese Arbeitsmittel nicht mit dem Telefon verknüpft. Bei modernen Telekommunikationsanlagen handelt es sich jedoch oft um spezialisierte Computer, die flexibel programmierbar sind und beispielsweise zur Protokollführung mit einem Datenbankrechner verbunden sind. Um an einem Arbeitsplatz eine kombinierte Nutzung von Telefon und Computer anwenden zu können, ist eine Anordnung gemäß der Figur 1 bekannt. Dort ist eine Telekommunikationsanlage 2 mit dem öffentlichen Telefonnetz 3 verbunden. In herkömmlicher Weise sind Telefone 5 mit der Telefonanlage 2 verbunden. Außerdem sind Datenverarbeitungsvorrichtungen 1 vorgesehen, die als Server in jedem Rechnernetzwerk vorhanden sind zur Ausführung von Datenbankanwendungen, Standardapplikationen und so weiter. Die Datenverarbeitungsvorrichtungen sind miteinander und mit Arbeitsplatzrechnern selbst über ein Netzwerk 8 verbunden. Außerdem ist ein Server 7 vorgesehen, der sowohl mit dem Netzwerk 8 als auch mit der Telefonanlage 2 in Verbindung steht. Dieser sogenannte Telefonieserver bewältigt die vielfältigen Funktionen, die eine Verbindung moderner Telefonanlagen 2 mit Arbeitsplatzrechnern 6 ermöglichen.

In der Figur 1 sind nur zwei Arbeitsplätze 4 dargestellt, in der Regel sind dies aber wesentlich mehr, beispielsweise in größeren Firmen oder Callcentern. Dies stellt für den Telefonieserver 7 eine erhebliche Belastung dar. Trotzdem ist die in der Figur 1 dargestellte Anordnung sehr flexibel, da weitere Arbeitsplätze 4 ergänzt werden können, ohne daß die Belastung der Datenverarbeitungsvorrichtungen 1 ein Maß annimmt, bei dem andere Applikationen in ihrer Funktion eingeschränkt werden. Allerdings ist ein solcher Aufbau relativ aufwendig, da ein zusätzlicher Telefonieserver 7 benötigt wird. Außerdem stellen Telefonanlagen 2 proprietäre Systeme dar, was bezüglich der Anbindung an den Telefonieserver 7 und die Erweiterung mit zusätzlichen Telefonanschlüssen Probleme mit sich bringt.

Aus der Patentschrift WO 99/38312 ist eine derartige Kommunikationsvorrichtung bekannt mit einer ersten Datenverarbeitungsvorrichtung (server) und einer zweiten Datenverarbeitungsvorrichtung, die Telekommunikationsschnittstellen und Mittel zum Austauschen von Daten mit der ersten Datenverarbeitungsvorrichtung aufweist. Gegenstand dieses Dokuments ist eine dezentral organisierte Kommunikationsanlage, die wie ein LAN-Netz organisiert und entsprechend skalierbar ist.

Eine einfachere Lösung zur Bewerkstelligung der Verbindung von Telefon und Datenverarbeitung ist in der Figur 2 gezeigt. Dort sind die Funktionen der Telefonanlage 2 und des Telefonieservers 7 in eine Datenverarbeitungsvorrichtung 11 integriert. Das öffentliche Telefonnetz 3 ist direkt an die Datenverarbeitungsvorrichtung 11 angeschlossen. Ebenso sind die Telefone 5 direkt mit der Datenverarbeitungsvorrichtung 11 verbunden. Daher müssen dort entsprechende Telekommunikationsschnittstellen vorgesehen werden, die beispielsweise als Steckkarten realisiert sind und in entsprechende Steckplätze der Datenverarbeitungsvorrichtung 11 eingeschoben werden. Solche Steckplätze sind zwar in der Regel vorhanden, allerdings sind sie nicht für die spezielle Verwendung in Verbindung mit Kommunikationsendgeräten ausgelegt. Zusätzlich zu den üblicherweise eingebauten Steckplätzen nach dem PCI-Standard müssen für Telekommunikationsanwendungen die Steckkarten daher noch über einen speziellen Telefonie-Bus, zum Beispiel "H.100", miteinander verbunden werden.

Ein solches Systems ist zwar wesentlich einfacher aufgebaut als das in Figur 1 beschriebene, da alle Funktionen in einem Gerät 11 realisiert werden, allerdings tritt eine Reihe von zusätzlichen Problemen auf. Die Belastung der Datenverarbeitungsvorrichtung 11 steigt mit dem Ausbaugrad der Kommunikationsvorrichtung stark an, so daß es zu Beeinträchtigungen im Betrieb kommen kann. Die Anzahl der anschließbaren Arbeitsplätze 4 hängt davon ab, wie viele PCI-Steckplätze die Datenverarbeitungsvorrichtung 11 aufweist. Eine einfache Erweiterbarkeit durch das Vorsehen zusätzlicher Steckkarten für weitere Arbeitsplätze 4 ist somit nicht gegeben. Außerdem stellt die zusätzliche Verkabelung zur Realisierung des Telefonie-Bus ein Problem dar, weil bei Telekommunikationsanwendungen das Austauschen einer Telekommunikationsschnittstelle im laufenden Betrieb dringend notwendig ist. Dies rührt von den hohen Anforderungen bezüglich der Ausfallsicherkeit her. Eine Modifizierung der Datenverarbeitungsvorrichtung, um besondere für Telefonieanwendungen geeignete Steckplätze bereitzustellen, scheidet aus Flexibilitätsgründen in der Regel aus.

Die Aufgabe der Erfindung ist es daher, eine Kommunikationsvorrichtung anzugeben, die sowohl einfach und damit kostengünstig im Aufbau ist, eine einfache Möglichkeit zur Erweiterung vorsieht und außerdem die Möglichkeit beinhaltet, Telekommunikationsschnittstellen im laufenden Betrieb auszutauschen.

Diese Aufgabe wird durch eine Kommunikationsvorrichtung gelöst mit einer ersten Datenverarbeitungsvorrichtung, die mit Arbeitsplatzrechnern verbunden ist, zur Realisierung einer Datenbankfunktion, und einer zweiten Datenverarbeitungsvorrichtung, die mit der ersten Datenverarbeitungsvorrichtung verbunden ist, mit Telekommunikationsschnittstellen, an die Arbeitsplatztelefone anschließbar sind, einer Steuervorrichtung zum Herstellen von Verbindungen zwischen mindestens zwei Telekommunikationsschnittstellen, wobei die Steuervorrichtung durch die erste Datenverarbeitungsvorrichtung ansteuerbar ist, Mittel zum Übertragen von Daten an die erste Datenverarbeitungsvorrichtung vorgesehen sind und ein Telefonieprogramm zur Realisierung einer Telefoniefunktion auf der zweiten Datenverarbeitungsvorrichtung vorgesehen ist.

Die Vereinfachung der erfindungsgemäßen Kommunikationsvorrichtung gegenüber dem Stand der Technik gemäß Figur 1 ergibt sich daraus, daß die Funktion der Telekommunikationsanlage und die Telefoniefunktion in einer Einheit zusammengefaßt sind. Andererseits werden aber die Nachteile des Standes der Technik gemäß Figur 2 vermieden, denn dadurch, daß die zweite Datenverarbeitungsvorrichtung und die erste Datenverawbeitungsvorrichtung getrennte Einheiten sind, kann die zweite Datenverarbeitungsvorrichtung beliebig ausgebaut werden, ohne daß die erste Datenverarbeitungsvorrichtung dadurch modifiziert werden muß. Die erste Datenverarbeitungsvorrichtung muß lediglich eine Datenschnittstelle zum Anschluß der zweiten Datenverarbeitungsvorrichtung vorsehen.

Günstig ist bei einer solchen Kommunikationsvorrichtung auch, daß eine übliche Datenverarbeitungsvorrichtung so erweitert werden kann, daß das Gesamtsystem für Computertelefonie geeignet ist. Dazu muß lediglich die zweite Datenverarbeitungsvorrichtung angeschafft und mit der ersten Datenverarbeitungsvorrichtung verbunden werden. Zusätzlich ist nur eine geeignete Software vorzusehen.

Die zweite Datenverarbeitungsvorrichtung ist vorteilhafterweise so ausgestaltet, daß sie eine Steuereinheit und eine Vielzahl von Steckplätzen zur Aufnahme von Steckkarten mit Telekommunikationsschnittstellen aufweist. Die Steuereinheit kann mit den Steckkarten über ein modernes erweitertes Bussystem, vorzugsweise CompactPCI, verbunden werden. Dadurch sind auch die Telefoniefunktionen realisiert, ohne daß ein zusätzliches Kabel beziehungsweise Bussystem vorgesehen werden muß.

Dies stellt die Austauschbarkeit der Komponenten im laufenden Betrieb sicher.

Die Erfindung wird nachfolgend anhand eines Ausführungsbeispieles näher erläutert. Es zeigt:
- Figur 1: und Figur 2 die bereits beschriebenen Anordnungen gemäß dem Stand der Technik,
- Figur 3: eine erfindungsgemäße Kommunikationsvorrichtung und
- Figur 4: den Aufbau einer zweiten Datenverarbeitungsvorrichtung zur Bereitstellung von Telekommunikationsschnittstellen.

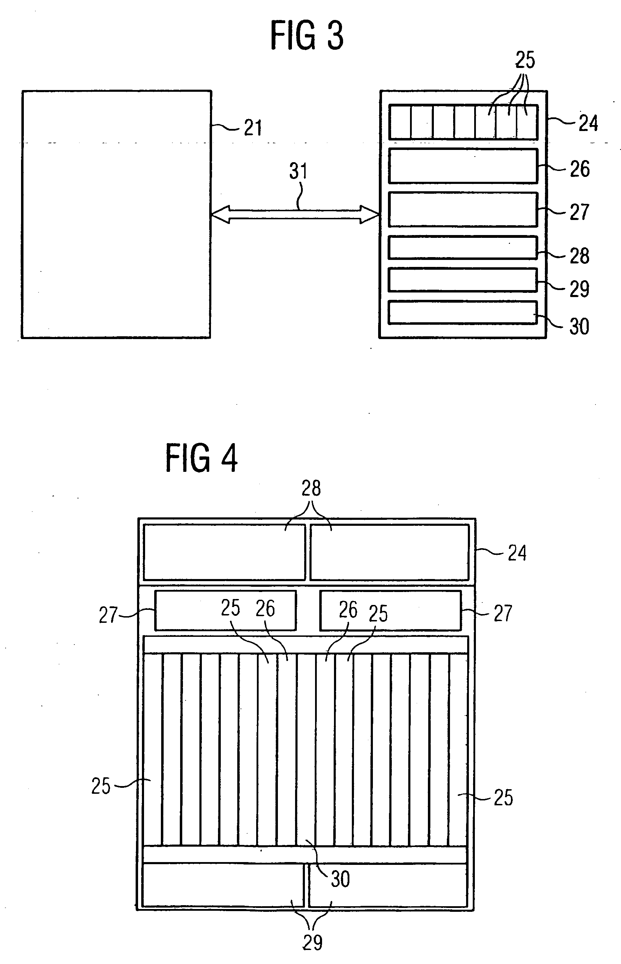

In der Figur 3 ist eine vollständige Kommunikationsvorrichtung nach der Erfindung dargestellt. Sie weist eine erste Datenverarbeitungsvorrichtung 21 und eine über eine Datenschnittstelle 31 damit verbundene zweite Datenverarbeitungsvorrichtung 24 zur Bereitstellung von Telekommunikationsschnittstellen 25 auf. Die erste Datenverarbeitungsvorrichtung 21 bewältigt die komplexen Datenbankvorgänge, die bei Telefonie über Rechnersysteme anfallen. Die erste Datenverarbeitungsvorrichtung 21 kann natürlich auch andere Applikationen bewältigen, angefangen von Standard-Büroanwendungen bis hin zu speziellen Anwendungen im Computertelefoniebereich. In diesen Funktionen unterscheidet sich die erste Datenverarbeitungsvorrichtung der erfindungsgemäßen Kommunikationsvorrichtung nicht von Standarddatenverarbeitungsvorrichtungen.

Neben den Telekommunikationsschnittstellen 25 weist die zweite Datenverarbeitungsvorrichtung 24 eine Steuervorrichtung 26 auf, den sogenannten "Target Channel Adapter", der die Koordination des Datenverkehrs zwischen den Telekommunikationsschnittstellen 25 und der ersten Datenverarbeitungsvorrichtung 21 über die Datenschnittstelle 31 steuert und controlliert. Die Verbindung erfolgt über die Datenschnittstelle 31.

Darüber hinaus ist eine Vorrichtung 27 zur Aufnahme von Diskettenlaufwerken, CD-ROM-Laufwerken oder anderen Komponenten vorgesehen. Nicht zuletzt muß die zweite Datenverarbeitungsvorrichtung über eine Stromversorgung 28 und eine Kühlung 29 verfügen. Ein Gerätemanager 30 sorgt für die Koordination der Geräte innerhalb der zweiten Datenverarbeitungsvorrichtung.

In der Figur 4 ist die in Figur 3 schematisch dargestellte Anordnung in einer Vorrichtung gezeigt, wie sie einem tatsächlichen Gerät entsprechen könnte. In der Mitte des Gerätes sind nebeneinander die Steckplätze für die Telekommunikationsschnittstellen 25, die Target Channel Adapter 26 sowie ein Gerätemanager 30 vorgesehen. Oberhalb davon finden sich Einschübe für 5,25"-Geräte, beispielsweise CD-ROM-Laufwerke. Den oberen Abschluß der Anordnung bilden zwei Stromversorgungseinheiten 28. Unterhalb der Steckplätze sind zwei Lüfter 29 zur Kühlung der gesamten zweiten Datenverarbeitungsvorrichtung 24 vorgesehen.

Die zweite Datenverarbeitungsvorrichtung 24 in Figur 4 ist in zwei unabhängige Einheiten aufgeteilt. So sind zwei Stromversorgungseinrichtungen 28, zwei Lüfter 29, zwei Steuereinheiten 26 und so weiter vorgesehen. Dadurch ist eine Hochverfügbarkeit gewährleistbar.

### Bezugszeichenliste

- 1: Datenverarbeitungsvorrichtung
- 2: Telekommunikationsanlage
- 3: öffentliches Telefonnetz
- 4: Arbeitsplatz
- 5: Telefon
- 6: Arbeitsplatzrechner
- 7: Telefonieserver
- 8: Netzwerk
- 11: Datenverarbeitungsvorrichtung
- 21: erste Datenverarbeitungsvorrichtung
- 24: zweite Datenverarbeitungsvorrichtung
- 25: Telekommunikationsschnittstellen
- 26: Steuervorrichtung
- 27: Einschubvorrichtung
- 28: Stromversorgungseinheiten
- 29: Lüfter
- 30: Gerätemanager
- 31: Datenschnittstelle

## Patentansprüche

1. Kommunikationsvorrichtung mit
- einer ersten Datenverarbeitungsvorrichtung (21), die mit Arbeitsplatzrechnern (6) verbunden ist, zur Realisierung einer Datenbankfunktion und
- einer zweiten Datenverarbeitungsvorrichtung (24), die mit der ersten Datenverarbeitungsvorrichtung (21) verbunden ist,
wobei die zweiten Datenverarbeitungsvorrichtung (24)
- Telekommunikationsschnittstellen (25), an die Arbeitsplatztelefone (5) anschließbar sind, und
- eine Steuervorrichtung (26) zum Herstellen von Verbindungen zwischen mindestens zwei Telekommunikationsschnittstellen (25) und
- Mittel zum Austauschen von Daten mit der ersten Datenverarbeitungsvorrichtung (21) und
- ein Telefonieprogramm zur Realisierung einer Telefoniefunktion
umfasst,
**dadurch gekennzeichnet, daß**
die Steuervorrichtung (26) der zweiten Datenverarbeitungsvorrichtung (24) durch die erste Datenverarbeitungsvorrichtung (21) ansteuerbar ist.

2. Kommunikationsvorrichtung nach Anspruch 1,
**dadurch gekennzeichnet, daß**
die erste Datenverarbeitungsvorrichtung (21) und die zweite Datenverarbeitungsvorrichtung (24) als getrennte Einheiten ausgebildet sind.

3. Kommunikationsvorrichtung nach Anspruch 1,
**dadurch gekennzeichnet, daß**
die Telekommunikationsschnittstellen (25) als Steckkarten realisiert sind.

4. Kommunikationsvorrichtung nach Anspruch 1,
**dadurch gekennzeichnet, daß**
die Steckkarten in CompactPCI-Technik mit der Verbindungseinheiteinheit (26) verbunden sind.

5. Kommunikationsvorrichtung nach Anspruch 1,
**dadurch gekennzeichnet, daß**
die zweite Datenverarbeitungsvorrichtung (24) ein hochleistungsfähiges Hochverfügbarkeitsrechnersystem ist.

## Claims

1. Communications device with
- a first data processing device (21), which is connected to workstation computers (6), to implement a database function, and
- a second data processing device (24), which is connected to the first data processing device (21),
whereby the second data processing device (24) comprises
- telecommunications interfaces (25), to which workstation telephones (5) can be connected, and
- a control device (26) to establish connections between at least two telecommunications interfaces (25), and
- means for exchanging data with the first data processing device (21), and
- a telephony program to implement a telephony function,
**characterised in that**
the control device (26) of the second data processing device (24) can be controlled by the first data processing device (21).

2. Communications device according to Claim 1,
**characterised in that**
the first data processing device (21) and the second data processing device (24) are designed as separate units.

3. Communications device according to Claim 1,
**characterised in that**
the telecommunications interfaces (25) are implemented as plug-in cards.

4. Communications device according to Claim 1,
**characterised in that**
the plug-in cards in CompactPCI technology are connected to the connection unit (26).

5. Communications device according to Claim 1,
**characterised in that** the second data processing device (24) is a high-performance, high-availability computer system.

## Revendications

1. Appareil de communication avec
- un premier appareil de traitement de données (21), qui est relié à des calculateurs de poste de travail (6), pour réaliser une fonction de banque de données et
- un deuxième appareil de traitement de données (24), qui est relié au premier appareil de traitement de données (21),
le deuxième appareil de traitement de données (24) comportant
- des interfaces de télécommunication (25) auxquelles on peut raccorder des téléphones de poste de travail (5), et
- un appareil de commande (26) pour établir des liaisons entre au moins deux interfaces de télécommunication (25) et
- des moyens pour l'échange de données avec le premier appareil de traitement de données (21) et
- un programme téléphonique pour réaliser une fonction téléphonique,
**caractérisé en ce que**
l'appareil de commande (26) du deuxième appareil de traitement de données (24) peut être piloté par le premier appareil de traitement de données (21).

2. Appareil de communication selon la revendication 1, **caractérisé en ce que** le premier appareil de traitement de données (21) et le deuxième appareil de traitement de données (24) sont réalisés sous la forme d'unités séparées.

3. Appareil de communication selon la revendication 1, **caractérisé en ce que** les interfaces de télécommunication (25) sont réalisées sous la forme de cartes enfichables.

4. Appareil de communication selon la revendication 1, **caractérisé en ce que** les cartes enfichables en technique PCI compacte sont reliées à l'unité de liaison (26).

5. Appareil de communication selon la revendication 1, **caractérisé en ce que** le deuxième appareil de traitement de données (24) est un système de calcul à haute disponibilité de grande puissance.
